# DEMANDE DE BREVET EUROPEEN

(11) **EP 1 306 406 A1**
(43) Date de publication de la demande: **02.05.2003**
(21) Numéro de dépôt: 02292470.8
(22) Date de dépôt: 07.10.2002
(51) Int. Cl.: C08L 23/10, C09J 123/10

(54) **Composition à base de polypropylène isotactique obtenu par catalyse metallocene et de polypropylene isotactique obtenu par catalyse ziegler natta, greffe**

(30) Priorité: 11.10.2001 FR 0113107
(71) Demandeur: Atofina, 92800 Puteaux (FR)
(72) Inventeur: Pradel, Jean-Laurent, 27300 Bernay (FR)

(57) **Abrégé**

La présente invention concerne une composition comprenant du polypropylène isotactique homo ou co-polymère obtenu par catalyse métallocène (A) abrégé miPP et du polypropylène isotactique homo ou co-polymère obtenu par catalyse Ziegler-Natta (B) abrégé zniPP et greffé. Elle concerne également un liant de coextrusion comprenant une telle composition.

Elle est également relative à une structure multicouche comprenant une couche (L) comprenant le liant précédent, et directement attachée à celle-ci une couche (J) :
- polaire azotée ou oxygénée telle qu'une couche de résine polyamide, de copolymère éthylène/acétate de vinyle saponifié (EVOH), de polyester ;
- d'un oxyde minéral déposé sur un polymère tel que le polyéthylène (PE), le polyéthylène téréphtalate (PET) ou l'EVOH ; ou
- métallique ou métalloplastique.

## Description

La présente invention concerne une composition comprenant un polypropylène isotactique obtenu par catalyse métallocène et un polypropylène isotactique obtenu par catalyse Ziegler-Natta lui-même greffé. Cette composition est utile comme liant de coextrusion.

Le liant de coextrusion comprend du polypropylène isotactique obtenu par catalyse Ziegler-Natta greffé, dilué dans du polypropylène isotactique obtenu par catalyse métallocène et éventuellement dilué dans au moins une polyoléfine (E) ou dans au moins un polymère à caractère élastomérique (D) ou dans au moins un mélange de (E) et (D).

Ce liant de coextrusion est utile par exemple pour fabriquer des matériaux multicouches pour l'emballage. On peut citer les matériaux comprenant un film de polyamide (PA) homo ou co-polymère et un film de polypropylène (PP) homo ou co-polymère, le film de polypropylène pouvant être laminé sur le film de polyamide ou coextrudé avec le polyamide. Le liant de coextrusion est disposé entre le film de polypropylène et le film de polyamide pour une bonne adhésion du PA et du PP. Ces matériaux multicouches peuvent être des structures à trois couches PP/liant/EVOH ou des structures à cinq couches PP/liant/EVOH/liant/PP dans lesquelles EVOH désigne un copolymère de l'éthylène et de l'alcool vinylique ou un copolymère éthylène acétate de vinyle (EVA) saponifié en partie ou en totalité.

Le polypropylène est décrit dans Kirk-Othmer, Encyclopedia of chemical technology, 4^{ième} édition, Vol 17, pages 784-819, John Wiley & sons, 1996. La quasi-totalité du polypropylène commercialisé est constitué essentiellement de polypropylène isotactique obtenu par catalyse Ziegler-Natta contenant éventuellement un peu de polypropylène atactique.

Le brevet US 5 235 149 décrit des emballages fermés par des opercules constitués d'une feuille d'aluminium, d'une couche de liant et d'une couche de polypropylène. La couche de liant de l'opercule est constituée de différents polymères greffés par l'acide acrylique ou l'anhydride maléique, les polymères peuvent être choisis parmi le polyéthylène, le polypropylène, les copolymères de l'éthylène et de l'acétate de vinyle et les copolymères de l'éthylène et de l'acrylate de méthyle.

Le brevet DE 19 535 915 A décrit un polypropylène bloc copolymère greffé pour coller des films de polypropylène sur des feuilles métalliques.

Le brevet EP 689 505 décrit des structures semblables à celles décrites dans le brevet précédent mais qui sont utilisées pour faire des emballages alimentaires.

Le brevet EP 658 139 décrit des structures semblables à celles décrites dans le brevet précédent mais le liant est un polypropylène copolymère statistique greffé comprenant de 1 à 10 % de comonomère, le rapport Mw/Mn est compris entre 2 et 10 et le MFI (Melt flow Index ou indice de fluidité à l'état fondu) est compris entre 1 et 20 g/ 10 min (à 230°C sous 2,16 kg).

On a maintenant trouvé que le polypropylène isotactique homo ou co-polymère obtenu par catalyse métallocène, abrégé par la suite miPP, permettait d'obtenir des compositions de liant présentant une adhérence comparable voire meilleure que celle des liants ne comprenant pas de miPP. Ce polypropylène présente un avantage applicatif par rapport au polypropylène obtenu par catalyse Ziegler-Natta lors de son utilisation dans des liants de coextrusion.

L'invention a pour objet une composition comprenant :
- 99 à 50 % en poids de polypropylène isotactique homo ou co-polymère obtenu par catalyse métallocène (A) ;
- 50 à 1 % d'un polymère ou d'un mélange de polymères, ledit polymère ou mélange de polymères comprenant de 50 à 100% en poids de polypropylène isotactique homo ou co-polymère obtenu par catalyse Ziegler-Natta (B) greffé par un monomère fonctionnalisé et de 0 à 50 % en poids de polymère (C) choisi parmi le poly-(1-butène) homo ou co-polymère (C1), le polystyrène homo ou co-polymère (C2), polyéthylène homo ou co-polymère (C3) et leurs mélanges, ledit polymère (C) étant lui-même greffé par un monomère fonctionnalisé, les pourcentages étant basés sur le total de polymères (A), (B) et (C).

Selon un mode de réalisation de la composition, le monomère fonctionnalisé est insaturé.

Selon un mode de réalisation de la composition, le monomère fonctionnalisé est pris dans le groupe comprenant les alcoxysilanes, les acides carboxyliques et leurs dérivés, les chlorures d'acides, les isocyanates, les oxazolines, les époxydes, les amines et les hydroxydes.

Selon un mode de réalisation de la composition, le monomère fonctionnalisé est l'anhydride maléique.

Selon un mode de réalisation de la composition, au moins un comonomère du polyéthylène (C3) co-polymère est choisi parmi les alpha-oléfines ayant de 3 à 30 atomes de carbone, les esters d'acides carboxyliques insaturés, les esters vinyliques d'acides carboxyliques saturés, les époxydes insaturés, les esters et éthers de glycidyle alicycliques, les acides carboxyliques insaturés, leurs sels, leurs anhydrides et les diènes.

Selon un mode de réalisation de la composition, le polyéthylène (C3) est choisi parmi le LDPE, le HDPE, le LLDPE, le VLDPE, le PE obtenu par catalyse métallocène, les élastomères EPR et EPDM et leurs mélanges, les copolymères éthylène/(méth)acrylate d'alkyle, les copolymères éthylène/(méth)acrylate d'alkyle/anhydride maléique, les copolymères éthylène/acétate de vinyle/anhydride maléique.

Selon un mode de réalisation de la composition, celle-ci est diluée dans une polyoléfine (E) et/ou un polymère à caractère élastomérique (D).

Selon un mode de réalisation de la composition, la quantité de polyoléfine (E) et/ou de polymère à caractère élastomérique (D) est avantageusement de 20 à 1000 et de préférence 30 à 500 parties (en poids) pour 10 parties de polypropylène isotactique homo ou co-polymère obtenu par catalyse Ziegler-Natta (B) greffé.

Selon un mode de réalisation de la composition, les proportions de polyoléfine (E) et de polymère à caractère élastomérique (D) sont telles que le rapport (D)/(E) est compris entre 0 et 1 et plus particulièrement entre 0 et 0,5.

Selon un mode de réalisation de la composition, celle-ci est comprise dans un liant de coextrusion.

L'invention concerne également l'utilisation de la composition ci-dessus pour fabriquer un liant de coextrusion.

L'invention a également pour objet une structure multicouche comprenant une couche (L) comprenant une composition telle que décrite précédemment et directement attachée à ladite couche (L), une couche (J) :
- polaire, azotée ou oxygénée, telle qu'une couche de résine polyamide, de copolymère d'éthylène et d'acétate de vinyle saponifié (EVOH), de polyester ; ou
- d'un oxyde minéral déposé sur un polymère tel que le PE, le polyéthylène téréphtalate (PET) ou l'EVOH ; ou
- métallique ou métalloplastique.

Selon un mode de réalisation de la structure, celle-ci comprend une couche (K) à base de polyoléfine directement attachée à la couche (L), la couche (L) étant ainsi prise en sandwich entre ladite couche (K) et la couche (J).

La composition à base de polypropylène isotactique homo ou co-polymère obtenu par catalyse métallocène (A) abrégé miPP comprend de plus au moins un polypropylène isotactique homo ou co-polymère obtenu par catalyse Ziegler-Natta (B) greffé et éventuellement un polymère (C) greffé, ledit polymère (C) étant choisi parmi le poly (1-butène) homo ou co-polymère (C1), le polystyrène homo ou co-polymère (C2), le polyéthylène homo ou co-polymère (C3), le mélange de (C1) et (C2), le mélange de (C1) et (C3), le mélange de (C2) et (C3) et le mélange de (C1), (C2) et (C3).

Le polypropylène isotactique homo ou co-polymère obtenu par catalyse métallocène (A) abrégé miPP et les systèmes permettant sa synthèse sont décrits dans les références suivantes de la demanderesse : US 6,214,949; US 5,968,854; EP 856525; US 5,789,502; EP 849286; EP 802206; US 5,561,092; EP 581754.

Le miPP (A) peut selon les références ci-dessus être un copolymère comprenant entre sensiblement 0 et 10 % en poids d'au moins un comonomère choisi parmi l'éthylène, le butène, l'isobutylène et le 4-méthyl pentène.

S'agissant du polymère (B), c'est un polypropylène isotactique homo- ou copolymère obtenu par catalyse Ziegler-Natta. A titre de comonomères, on peut citer :
- les alpha oléfines, avantageusement celles ayant de 3 à 30 atomes de carbone. Des exemples de telles alphaoléfines sont les mêmes que pour (C3) sauf à remplacer le propylène par l'éthylène dans la liste ci-dessous,
- les diènes

Le polymère (B) peut être aussi un copolymère à blocs polypropylène.

A titre d'exemple de polymère (B) on peut citer :
- le polypropylène
- les mélanges de polypropylène et d'EPDM ou d'EPR.

Avantageusement le polymère (B), qui peut être un mélange de plusieurs polymères, comprend au moins 50 % et de préférence 75 % en moles de propylène.

S'agissant du polymère (C3), il est choisi parmi les polyéthylènes homo- ou copolymères.

A titre de comonomères, on peut citer la liste suivante :
- les alpha-oléfines, avantageusement celles ayant de 3 à 30 atomes de carbone. Des exemples d'alpha-oléfines ayant 3 à 30 atomes de carbone comprennent le propylène, 1-butène, 1-pentène, 3-méthyl-1-butène, 1-hexène, 4-méthyl-1-pentène, 3-méthyl-1-pentène, 1-octène, 1-décène, 1-dodécène, 1-tétradécène, 1-hexadécène, 1-octadécène, 1-eicosène, 1-docosène, 1-tétracosène, 1-hexacosène, 1-octacosène, et 1-triacontène. Ces alpha-oléfines peuvent être utilisées seules ou en mélange de deux ou de plus de deux.
- les esters d'acides carboxyliques insaturés tels que par exemple les (méth)acrylates d'alkyle, les alkyles pouvant avoir jusqu'à 24 atomes de carbone. Des exemples d'acrylate ou méthacrylate d'alkyle sont notamment le méthacrylate de méthyle, l'acrylate d'éthyle, l'acrylate de n-butyle, l'acrylate d'isobutyle, l'acrylate de 2-éthylhexyle.
- les esters vinyliques d'acides carboxyliques saturés tels que par exemple l'acétate ou le propionate de vinyle.
- les époxydes insaturés. Des exemples d'époxydes insaturés sont notamment : les esters et éthers de glycidyle aliphatiques tels que l'allylglycidyléther, le vinylglycidyléther, le maléate et l'itaconate de glycidyle, l'acrylate et le méthacrylate de glycidyle, et les esters et éthers de glycidyle alicycliques tels que le 2-cyclo-hexène-1-glycidyléther, le cyclohexène-4,5-diglycidylcarboxylate, le cyclohexène-4-glycidyl carboxylate, le 5-norbornène-2-méthyl-2-glycidyl carboxylate et l'endocisbicyclo(2,2,1)-5-heptène-2,3-diglycidyl dicarboxylate.
- les acides carboxyliques insaturés, leurs sels, leurs anhydrides. Des exemples d'anhydrides d'acide dicarboxylique insaturé sont notamment l'anhydride maléique, l'anhydride itaconique, l'anhydride citraconique, l'anhydride tétrahydrophtalique.
- les diènes tels que par exemple le 1,4-hexadiène.

Le polymère (C3) peut comprendre plusieurs comonomères.

Avantageusement le polymère (C3), qui peut être un mélange de plusieurs polymères, comprend au moins 50 % et de préférence 75 % en moles d'éthylène. La densité de (C3) est comprise entre 0,86 et 0,98 g/cm³. Le MFI (abréviation de Melt Flow Index, c'est à dire indice de fluidité à l'état fondu, ici mesuré à 190°C, sous 2,16 kg) est compris avantageusement entre 1 et 1000 g/10 min.

A titre d'exemple de polymères (C3), on peut citer :
- le polyéthylène basse densité (LDPE)
- le polyéthylène haute densité (HDPE)
- le polyéthylène linéaire basse densité (LLDPE)
- le polyéthylène très basse densité (VLDPE)
- le polyéthylène obtenu par catalyse métallocène, c'est-à-dire les polymères obtenus par copolymérisation d'éthylène et d'alphaoléfine telle que propylène, butène, héxène ou octène en présence d'un catalyseur monosite constitué généralement d'un atome de zirconium ou de titane et de deux molécules cycliques alkyles liées au métal. Plus spécifiquement, les catalyseurs métallocènes sont habituellement composés de deux cycles cyclopentadiéniques liés au métal. Ces catalyseurs sont fréquemment utilisés avec des aluminoxanes comme cocatalyseurs ou activateurs, de préférence le méthylaluminoxane (MAO). Le hafnium peut aussi être utilisé comme métal auquel le cyclopentadiène est fixé. D'autres métallocènes peuvent inclure des métaux de transition des groupes IV A, V A, et VI A. Des métaux de la série des lanthanides peuvent aussi être utilisés.
- les élastomères EPR (éthylène - propylène - rubber) ;
- les élastomères EPDM (éthylène - propylène - diène) ;
- les mélanges de polyéthylène avec un EPR ou un EPDM ;
- les copolymères éthylène/(méth)acrylate d'alkyle pouvant contenir jusqu'à 60 % en poids de (méth)acrylate d'alkyle et de préférence de 2 à 40 % ;
- les copolymères éthylène/(méth)acrylate d'alkyle/anhydride maléique obtenus par copolymérisation des trois monomères, les proportions de (méth)acrylate d'alkyle étant identiques à celles ci-dessus, la quantité d'anhydride maléique étant de 0 à 10 % et de préférence de 0,2 à 6 % en poids.
- les copolymères éthylène/acétate de vinyle/anhydride maléique obtenus par copolymérisation des trois monomères, les proportions de l'acétate de vinyle étant les mêmes que celles du (méth)acrylate d'alkyle dans les copolymères précédents et les proportions de MAH étant les mêmes que celles des copolymères ci-dessus.

S'agissant du polymère (C2), il est choisi parmi le polystyrène ou les copolymères du styrène. Parmi les comonomères, on peut citer à titre d'exemple les diènes ayant de 4 à 8 atomes de carbone.

S'agissant du polymère (C1), il est choisi parmi le poly(1-butène) ou les copolymères du 1-butène avec l'éthylène ou une autre alpha oléfine ayant de 3 à 10 atomes de carbone, sauf le polypropylène (B) déjà cité.

S'agissant du monomère greffé sur le polymère (C) et/ou sur le polypropylène homo ou co-polymère obtenu par catalyse Ziegler-Natta (B), il est insaturé. De plus, c'est un monomère dit fonctionnalisé c'est à dire comprenant au moins une fonction chimique : on peut citer à titre d'exemple les alcoxysilanes, les acides carboxyliques et leurs dérivés, les chlorures d'acides, les isocyanates, les oxazolines, les époxydes, les amines ou les hydroxydes.

Parmi les alcoxysilanes portant une insaturation, on peut citer :
- les vinyltrialcoxysilanes CH₂=CH-Si(OR)₃ ;
- les allyltrialcoxysilanes CH₂=CH-CH₂-Si(OR)₃ ;
- les (méth)acryloxyalkyltrialcoxysilanes (ou (méth)acrylsilanes)
CH₂=CR₁-CO-O-Y-Si(OR)₃ dans lesquels : R est un alkyl ayant de 1 à 5 atomes de carbone ou un alcoxyle -R₂OR₃ dans lequel R₂ et R₃ sont des alkyles ayant au plus 5 atomes de carbone pour l'ensemble R₂ et R₃ ; R₁ est un hydrogène ou un méthyle ; Y est un alkylène ayant de 1 à 5 atomes de carbone.

On utilise, par exemple, des vinylsilanes tels que le triméthoxyvinylsilane, triéthloxyvinylsilane, tripropoxyvinylsilane, tributoxyvinylsilane, tripentoxyvinylsilane, tris(β-méthoxyéthoxy)-vinylsilane, des allylsilanes tels que le triméthoxyallylsilane, triéthoxyallylsilane, tripropoxyallylsilane, tributoxyallylsilane, tripentoxyallylsilane, des acrylsilanes tels que l'acryloxyméthyltriméthoxysilane, méthacryloxyméthylméthoxysilane, acryloxyéthyltriméthoxysilane, méthacryloxyméthylméthoxysilane, acryloxyéthyltriméthoxysilane, méthacryloxyéthyltriméthoxysilane, acryloxypropyltriméthoxysilane, méthacryloxypropyltriméthoxysilane, acryloxybutyltriméthoxysilane, méthacryloxybutylméthoxysilane, acryloxyéthyltriéthoxysilane, méthacryloxyéthyltriéthoxysilane, méthacryloxyéthyltripropoxysilane, acryloxypropyltributoxysilane, ou le méthacryloxypropyltripentoxysilane.

On peut aussi utiliser des mélanges de ces produits. On utilise de préférence :
- le vinyltriméthoxysilane (VTMO) CH₂=CH-Si-(OCH₃)₃ ;
- le vinyltriéthoxysilane (VTEO) CH₂=CH-Si-(OCH₂CH₃)₃ ;
- le vinyltriméthoxyéthoxysilane (VTMOEO)
   CH₂=CH-Si-(OCH₂-CH₂OCH₃)₃; et
- le (3-(méthacryloxy)propyl)triméthoxysilane
   CH₂=C(CH₃)-C(O)O-(CH₂)₃-Si(OCH₃)₃

Des exemples d'acides carboxyliques insaturés sont ceux ayant 2 à 20 atomes de carbone tels que les acides acrylique, méthacrylique, maléique, fumarique et itaconique. Les dérivés fonctionnels de ces acides comprennent par exemple les anhydrides, les dérivés esters, les dérivés amides, les dérivés imides et les sels métalliques (tels que les sels de métaux alcalins) des acides carboxyliques insaturés.

Des acides dicarboxyliques insaturés ayant 4 à 10 atomes de carbone et leurs dérivés fonctionnels, particulièrement leurs anhydrides, sont des monomères de greffage particulièrement préférés.

Ces monomères de greffage comprennent par exemple les acides maléique, fumarique, itaconique, citraconique, allylsuccinique, cyclohex-4-ène-1,2-dicarboxylique, 4-méthyl-cyclohex-4-ène-1,2-dicarboxylique, bicycio(2,2,1)hept-5-ène-2,3-dicarboxylique, x-méthylbicyclo(2,2,1)-hept-5-ène-2,3-dicarboxylique, les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique, et x-méthylbicyclo(2,2,1)hept-5-ène-2,2-dicarboxylique.

Des exemples d'autres monomères de greffage comprennent des esters alkyliques en C₁-C₈ ou des dérivés esters glycidyliques des acides carboxyliques insaturés tels que acrylate de méthyle, méthacrylate de méthyle, acrylate d'éthyle, méthacrylate d'éthyle, acrylate de butyle, méthacrylate de butyle, acrylate de glycidyle, méthacrylate de glycidyle, maléate de mono-éthyle, maléate de diéthyle, fumarate de monométhyle, fumarate de diméthyle, itaconate de monométhyle, et itaconate de diéthyle ; des dérivés amides des acides carboxyliques insaturés tels que acrylamide, méthacrylamide, monoamide maléique, diamide maléique, N-monoéthylamide maléique, N,N-diéthylamide maléique, N-monobutylamide maléique, N,N-dibutylamide maléique, monoamide fumarique, diamide fumarique, N-monoéthylamide fumarique, N,N-diéthylamide fumarique, N-monobutylamide fumarique et N,N-dibutylamide fumarique ; des dérivés imides des acides carboxyliques insaturés tels que maléimide, N-butylmaléimide et N-phénylmaléimide ; et des sels métalliques d'acides carboxyliques insaturés tels que acrylate de sodium, méthacrylate de sodium, acrylate de potassium, et méthacrylate de potassium.

Divers procédés connus peuvent être utilisés pour greffer un monomère de greffage sur le polymère (C) et/ou sur le polypropylène homo ou co-polymère obtenu par catalyse Ziegler-Natta (B).

Par exemple, ceci peut être réalisé en le chauffant à température élevée, environ 150°C à environ 300°C, en présence ou non d'un solvant avec ou sans initiateur de radicaux.

Des solvants appropriés pouvant être utilisés dans cette réaction sont le benzène, toluène, xylène, chlorobenzène, cumène, entre autres.

Des initiateurs de radicaux appropriés pouvant être utilisés comprennent le t-butyl-hydroperoxyde, cumène-hydroperoxyde, di-iso-propyl-benzène-hydroperoxyde, di-t-butyl-peroxyde, t-butyl-cumyl-peroxyde, (dicumyl-peroxyde, 1,3-bis-(t-butylperoxy-isopropyl)benzène, acétyl-peroxyde, benzoyl-peroxyde, iso-butyryl-peroxyde, bis-3,5,5-triméthyl-hexanoyl-peroxyde, et méthyl-éthyl-cétone-peroxyde.

Le polymère (C) et/ou le polypropylène homo ou co-polymère obtenu par catalyse Ziegler-Natta (B), peuvent être prémélangés à sec ou à l'état fondu puis être greffés à l'état fondu ou en solution dans un solvant. Ils peuvent aussi être ajoutés séparément dans un dispositif de mise en contact et malaxage (par exemple une extrudeuse) avec le monomère de greffage et l'initiateur de radicaux. On peut utiliser les dispositifs habituels de mélange et malaxage de l'industrie des thermoplastiques.

La quantité du monomère de greffage peut être choisie d'une façon appropriée mais elle est de préférence de 0,01 à 10 %, de préférence de 0,1 à 5 %, par rapport au poids de la composition de zniPP (B) et éventuellement de polymère (C) à greffer. La quantité du monomère greffé est déterminée par dosage des fonctions succiniques par spectroscopie IRTF.

Le polypropylène isotactique obtenu par catalyse Ziegler-Natta (B) greffé est fabriqué :
- soit par greffage d'un mélange contenant au moins (B) et éventuellement au moins un polymère (C) choisi parmi (C1), (C2), (C3) et leur mélange. Avantageusement la proportion de (B) est d'au moins de 50 % et de préférence 70 % en poids du mélange à greffer ;
- soit par greffage du polypropylène isotactique obtenu par catalyse Ziegler-Natta (B) puis éventuellement son mélange avec au moins un polymère (C) lui-même greffé et choisi parmi (C1), (C2), (C3) et leur mélange. Dans ce cas, le monomère de greffage utilisé pour greffer le zniPP (B) peut être identique ou différent de celui utilisé pour greffer le polymère (C).

Puis ce polypropylène isotactique obtenu par catalyse Ziegler Natta (B) greffé est dilué dans du polypropylène isotactique obtenu par catalyse métallocène (A) et éventuellement dans au moins une polyoléfine (E) ou un polymère à caractère élastomérique (D) ou dans un mélange de (E) et (D).

- En effet, l'invention concerne aussi un liant de coextrusion comprenant :
- du polypropylène isotactique obtenu par catalyse métallocène (A) ;
- du polypropylène isotactique homo ou co-polymère obtenu par catalyse Ziegler-Natta (B) greffé et éventuellement du polymère (C) greffé ; et
- au moins une polyoléfine (E) ou au moins un polymère à caractère élastomérique (D) ou au moins un mélange de (E) et (D).

La polyoléfine (E) peut être choisie parmi les polymères (C) et le polypropylène isotactique obtenu par catalyse métallocène (A).

Le polymère (D) est un polymère à caractère élastomérique, c'est-à-dire qu'il peut être :
- (i) un élastomère au sens de la norme ASTM D412 signifiant qu'il peut être étiré à température ambiante à deux fois sa largeur, maintenu ainsi 5 minutes puis revenir à moins de 10 % près à sa taille initiale quand il est relâché ; ou
- (ii) un polymère n'ayant pas exactement les caractéristiques précédentes mais pouvant être étiré et revenir sensiblement à sa taille initiale.

- Avantageusement le MFI de (D) est compris entre 0,1 et 50 g/10min.

- A titre d'exemple de polymères (D) on peut citer :
- les EPR (éthylène propylène rubber) et les EPDM (éthylène propylène diène) ;
- les polyéthylènes obtenus par catalyse métallocène et de densité inférieure à 0,910 g/cm³ ;
- les polyéthylènes de type VLDPE (très basse densité);
- les élastomères styréniques tels que les SBR (styrène -butadiène-rubber), les copolymères blocs styrène/butadiène/styrène (SBS), les copolymères blocs styrène/éthylène/butène/styrène (SEBS) et les copolymères blocs styrène/isoprène/styrène (SIS) ;
- les copolymères de l'éthylène et d'au moins un ester d'acide carboxylique insaturé (déjà défini plus haut pour (C3)) ;
- les copolymères de l'éthylène et d'au moins un ester vinylique d'acide carboxylique saturé (déjà défini plus haut pour (C3)).

La quantité de polypropylène isotactique obtenu par catalyse métallocène (A) et éventuellement de polyoléfine (E) et/ou de polymère à caractère élastomérique (D) peut être de 20 à 1 000 et de préférence 60 à 500 parties (en poids) pour 10 parties de polypropylène isotactique obtenu par catalyse Ziegler-Natta (B) greffé. Avantageusement, on utilise le polypropylène isotactique obtenu par catalyse métallocène (A) et la polyoléfine (E). Les proportions préférées sont telles que le rapport de la quantité de polyoléfine (E) sur le polypropylène isotactique obtenu par catalyse métallocène (A) est compris entre 0 et 1 et plus particulièrement entre 0 et 0,5.

Le liant de l'invention peut être fabriqué par les moyens habituels des thermoplastiques par mélange des différents constituants à l'état fondu dans des extrudeuses bivis BUSS®, des malaxeurs ou des mélangeurs à cylindre.

Le liant de l'invention peut comprendre encore divers additifs tels que des antioxydants, des absorbeurs d'ultra-violets, des agents antistatiques, des pigments, des colorants, des agents de nucléation, des charges, des agents de glissement, des lubrifiants, des produits ignifuges et des agents anti-blocage.

S'agissant de la structure multicouche selon la présente invention, elle comprend une couche (L) comprenant le liant précédemment décrit, et directement attachée à celle-ci une couche (J) pouvant être une couche :
- (i) de résine polaire oxygénée ou azotée,
- (ii) d'un oxyde minéral déposé sur un polymère tel que le polyéthylène (PE), le polyéthylènetéréphtalate (PET) ou le copolymère éthylène/alcool vinylique (EVOH), ou
- (iii) une couche métallique ou métalloplastique.

Des exemples de résines polaires préférées dans la couche (J) sont les résines de polyamide, un copolymère d'éthylène et d'acétate de vinyle saponifié, et les polyesters.

Plus spécifiquement, ces résines polaires comprennent des polyamides synthétiques à longue chaîne ayant des motifs structurels du groupe amide dans la chaîne principale, tels que le PA-6, PA-6,6, PA-6,10, PA-11 et le PA-12 ; un copolymère saponifié d'éthylène et d'acétate de vinyle ayant un degré de saponification d'environ 90 à 100% en moles, obtenu en saponifiant un copolymère éthylène/acétate de vinyle ayant une teneur en éthylène d'environ 15 à environ 60 % en moles ; des polyesters tels que le polyéthylène-téréphtalate, le polybutylène-téréphtalate, le polyéthylène naphténate et des mélanges de ces résines.

La couche d'oxyde minéral peut être par exemple de la silice, déposée sur une couche de PE, de PET ou d'EVOH. Dans ce cas, la structure selon l'invention comprend donc successivement : une couche de liant comprenant la composition selon l'invention attachée à une couche de SiO₂ (ou SiOₓ) elle-même déposée sur une couche de PE, de PET ou d'EVOH.

La couche métallique peut être par exemple une pellicule ou une feuille d'un métal tel que l'aluminium, le fer, le cuivre, l'étain et le nickel, ou un alliage contenant au moins un de ces métaux comme constituant majoritaire. L'épaisseur de la pellicule ou de la feuille est par exemple d'environ 0,01 à environ 0,2 mm. Il est de pratique courante de dégraisser la surface de la couche métallique avant de laminer sur elle le liant selon l'invention. Cette couche (J) peut être aussi une couche métalloplastique telle que par exemple une feuille de PET recouverte d'aluminium.

On ne sortirait pas du cadre de l'invention si la structure précédente était associée à d'autres couches.

L'invention concerne également la précédente structure associée à une couche (K) à base de polyoléfine du côté resté libre de la couche (L) de liant, la couche de liant (L) permettant ainsi l'adhésion des couches (J) et (K) entre elles. La structure définie ici est de la forme Couche (K)/Couche (L)/Couche (J). La polyoléfine de la couche (K) peut être choisie parmi les polymères (C) décrits plus haut.

Ces structures sont utiles pour faire des emballages, par exemple des corps creux rigides tels que des flacons, des bouteilles, des poches souples, ou des films multicouches.

Les structures selon l'invention sont, par exemple, de la forme suivante avec le liant comprenant la composition selon l'invention :
- Couche (K) / Couche (L) / Couche (J) / Couche (L) / Couche (K) : PE / liant / EVOH / liant / PE ou PP / liant / EVOH / liant / PP ou PE / liant / EVOH / liant / PP
- Couche (K) / Couche (L) / Couche (J) : PE / liant / EVOH ou PE / liant / PA ou PP / liant / PA

Ces structures et ces emballages peuvent être fabriqués par coextrusion, lamination, extrusion-soufflage et couchage.

Pour réaliser les essais et comparatifs qui suivent, on a utilisé les produits suivants :
**miPP 1:** Polypropylène copolymère isotactique obtenu par catalyse métallocène contenant 3,5 % d'éthylène.
Densité = 0,900 g/cm³, MFI = 7 g/10min (à 230°C sous 2,16 kg)
**miPP 2:** Polypropylène copolymère isotactique obtenu par catalyse métallocène contenant 3,5 % d'éthylène.
Densité = 0,900 g/cm³, MFI = 8 g/10min (à 230°C sous 2,16 kg)
**miPP 3:** Polypropylène copolymère isotactique obtenu par catalyse métallocène contenant 5 % d'éthylène.
Densité = 0,900 g/cm³, MFI = 2,5 g/10min (à 230°C sous 2,16 kg)
**PP 3020 GN3 :** Polypropylène copolymère statistique obtenu par catalyse Ziegler-Natta (zniPP).
Densité = 0,900 g/cm³, MVI (Melt Volume Index)=2 cm³/10min (à 230°C sous 2,16 kg).
**PP terpo :** Polypropylène terpolymère statistique.
Densité = 0,900 g/cm³, MVI = 5 cm³/10min (à 230°C sous 2,16 kg).
**MAH :** Anhydride maléique.
**PPAM2 :** Polypropylène greffé par l'anhydride maléique contenant 2,5 % de MAH.
MFI = 40 g/10min (à 190°C sous 325g).
**LLDPE :** Polyéthylène linéaire basse densité.
Densité = 0,900 g/cm³, MFI = 3 g/10 min (à 190°C sous 2,16 kg).
**EPR :** Ethylène-Propylène-Rubber.
Densité = 0,870 g/cm³, MFI =5 g/10min (à 190°C sous 2,16 kg).
**mPE :** Polyéthylène obtenu par catalyse métallocène.
Densité = 0,870 g/cm³, MFI =5 g/10min (à 190°C sous 2,16 kg).

Les produits sont fabriqués en extrudeuse bi-vis corotative de type LEISTRITZ®.

L'extrudeuse comprend 8 zones numérotées Z1 à Z8, la zone Z8 étant située en fin d'extrudeuse du côté de la sortie des produits greffés. On opère aux températures habituelles connues de l'homme de l'art.

L'anhydride maléïque, et le polypropylène à greffer sont introduits en zone Z1 par l'intermédiaire de deux doseurs pondéraux séparés.

L'initiateur radicalaire, pur ou en dilution dans un solvant approprié, est introduit par une pompe doseuse en zone Z2. Les températures dans les zones Z3, Z4 et Z5 sont au moins suffisantes pour que 99,9 % de l'initiateur radicalaire réagisse avant la zone Z6. L'initiateur utilisé est le peroxyde de 2,5 diméthyl-2,5-di(tert-butyl)-hexane ou DHBP (LUPEROX® 101). Les résidus de l'initiateur radicalaire, le solvant et l'anhydride maléïque n'ayant pas réagi sont dégazés sous vide en zone Z6.

Le débit d'extrusion en sortie de la zone Z8 varie suivant la vitesse de vis imposée entre 12 et 15 kg/h. Le jonc est granulé après refroidissement.

On a ensuite réalisé en technologie cast une structure à 5 couches successivement et respectivement PP/liant/EVOH/liant/PP dans laquelle :
- PP désigne une couche de polypropylène isotactique obtenu par catalyse Ziegler-Natta (zniPP),
- Liant désigne une couche comprenant la composition définie dans le tableau 1 avec CP1 à CP4, les comparatifs de 1 à 4 et EX1 à EX3, les exemples de 1 à 3 selon l'invention, et
- EVOH désigne une couche de copolymère éthylène/alcool vinylique.

L'épaisseur des couches successives est respectivement en µm: 20/10/10/10/50.

On a ensuite mesuré la force de pelage entre la couche de liant de 10 µm et la couche d'EVOH de 10 µm, du coté de la couche de PP de 20 µm (CAS 1), ainsi qu'entre la couche de liant de 10 µm et la couche d'EVOH de 10 µm, du coté de la couche de PP de 50 µm (CAS 2).

La force de pelage est exprimée en N/15mm à une vitesse de tirage de 200mm/min à t=0, c'est à dire immédiatement après la réalisation de la structure, et à t=8, c'est à dire 8 jours après la réalisation de la structure. Les compositions de liant en % en poids, les forces de pelage à t=0 et t=8jours et les écarts types (σ) à t=0 (σ0) et t=8jours (σ8) sont données dans le Tableau 2.

**TABLEAU 1**

| | **Com position du Liant** | | | | | |
|---|---|---|---|---|---|---|
| | **(A)** | **(%)** | **(E)** | **(%)** | **(B)** | **(%)** |
| CP1 | PP 3020GN3 | 74 | LLDPE | 20 | PPAM2 | 6 |
| CP2 | PP 3020GN3 | 74 | EPR | 20 | PPAM2 | 6 |
| CP3 | PP 3020GN3 | 74 | mPE | 20 | PPAM2 | 6 |
| CP4 | PP Terpo | 74 | mPE | 20 | PPAM2 | 6 |
| EX1 | miPP 1 | 74 | mPE | 20 | PPAM2 | 6 |
| EX2 | miPP 2 | 74 | mPE | 20 | PPAM2 | 6 |
| EX3 | miPP 3 | 74 | mPE | 20 | PPAM2 | 6 |

**TABLEAU 2**

| | **CAS 1** | | | | **CAS 2** | | | |
|---|---|---|---|---|---|---|---|---|
| | **Force de pelage à t=0 (N/15mm)** | **σ0** | **Force de pelage à t=8 (N/15mm)** | **σ8** | **Force de pelage à t=0 (N/15mm)** | **σ0** | **Force de pelage à t=8 (N/15mm)** | **σ8** |
| CP1 | 4,99 | 0,61 | 6,33 | 0,39 | 1,83 | 0,06 | 3,27 | 0,1 |
| CP2 | 5,69 | 0,35 | 7,3 | 0,12 | 2,6 | 0,11 | 4,28 | 0,22 |
| CP3 | 5,71 | 0,62 | 7,3 | 0,4 | 2,76 | 0,15 | 4,20 | 0,33 |
| CP4 | 5,75 | 0,1 | 6,69 | 0,05 | 2,4 | 0,1 | 4,35 | 0,05 |
| EX 1 | 5,44 | 0,09 | 6,94 | 0,07 | 2,63 | 0,04 | 4,91 | 0,04 |
| EX 2 | 5,6 | 0,13 | 7,02 | 0,12 | 2,73 | 0,07 | 4,87 | 0,14 |
| EX 3 | 5,76 | 0,29 | 7,11 | 0,25 | 2,60 | 0,05 | 4,02 | 0,08 |

## Revendications

1. Composition comprenant :
- 99 à 50 % en poids de polypropylène isotactique homo ou co-polymère obtenu par catalyse métallocène (A) ;
- 50 à 1 % d'un polymère ou d'un mélange de polymères, ledit polymère ou mélange de polymères comprenant de 50 à 100% en poids de polypropylène isotactique homo ou co-polymère obtenu par catalyse Ziegler-Natta (B) greffé par un monomère fonctionnalisé et de 0 à 50 % en poids de polymère (C) choisi parmi le poly-(1-butène) homo ou co-polymère (C1), le polystyrène homo ou co-polymère (C2), polyéthylène homo ou co-polymère (C3) et leurs mélanges, ledit polymère (C) étant lui-même greffé par un monomère fonctionnalisé, les pourcentages étant basés sur le total de polymères (A), (B) et (C).

2. Composition selon la revendication 1, **caractérisée en ce que** le monomère fonctionnalisé est insaturé.

3. Composition selon l'une des revendications 1 ou 2, **caractérisée en ce que** le monomère fonctionnalisé est pris dans le groupe comprenant les alcoxysilanes, les acides carboxyliques et leurs dérivés, les chlorures d'acides, les isocyanates, les oxazolines, les époxydes, les amines et les hydroxydes.

4. Composition selon l'une des revendications 1 à 3, **caractérisée en ce que** le monomère fonctionnalisé est l'anhydride maléique.

5. Composition selon l'une des revendications 1 à 4, **caractérisée en ce qu'**au moins un comonomère du polyéthylène (C3) co-polymère est choisi parmi les alpha-oléfines ayant de 3 à 30 atomes de carbone, les esters d'acides carboxyliques insaturés, les esters vinyliques d'acides carboxyliques saturés, les époxydes insaturés, les esters et éthers de glycidyle alicycliques, les acides carboxyliques insaturés, leurs sels, leurs anhydrides et les diènes.

6. Composition selon l'une des revendications 1 à 4, **caractérisée en ce que** le polyéthylène (C3) est choisi parmi le LDPE, le HDPE, le LLDPE, le VLDPE, le PE obtenu par catalyse métallocène, les élastomères EPR et EPDM et leurs mélanges, les copolymères éthyléne/(méth)acrylate d'alkyle, les copolymères éthylène/(méth)acrylate d'alkyle/anhydride maléique, les copolymères éthylène/acétate de vinyle/anhydride maléique.

7. Composition selon l'une des revendications 1 à 6, **caractérisée en ce qu'**elle est diluée dans une polyoléfine (E) et/ou un polymère à caractère élastomérique (D).

8. Composition selon la revendication 7 dans laquelle la quantité de polyoléfine (E) et/ou de polymère à caractère élastomérique (D) est avantageusement de 20 à 1000 et de préférence 30 à 500 parties (en poids) pour 10 parties de polypropylène isotactique homo ou co-polymère obtenu par catalyse Ziegler-Natta (B) greffé.

9. Composition selon la revendication 7 ou 8 dans laquelle les proportions de polyoléfine (E) et de polymère à caractère élastomérique (D) sont telles que le rapport (D)/(E) est compris entre 0 et 1 et plus particulièrement entre 0 et 0,5.

10. Composition selon l'une des revendications précédentes, **caractérisée en ce qu'**elle est comprise dans un liant de çoextrusion.

11. Utilisation de la composition selon l'une des revendications 1 à 9 pour fabriquer un liant de coextrusion.

12. Structure multicouche comprenant une couche (L) comprenant une composition selon l'une quelconque des revendications précédentes et directement attachée à ladite couche (L) une couche (J) :
- polaire, azotée ou oxygénée, telle qu'une couche de résine polyamide, de copolymère d'éthylène et d'acétate de vinyle saponifié (EVOH), de polyester ; ou
- d'un oxyde minéral déposé sur un polymère tel que le PE, le polyéthylène téréphtalate (PET) ou l'EVOH ; ou
- métallique ou métalloplastique.

13. Structure selon la revendication 11 comprenant une couche (K) à base de polyoléfine directement attachée à la couche (L), la couche (L) étant ainsi prise en sandwich entre ladite couche (K) et la couche (J).
